# EUROPEAN PATENT APPLICATION

(11) **EP 1 930 848 A2**
(43) Date of publication of application: **11.06.2008**
(21) Application number: 07022452.2
(22) Date of filing: 20.11.2007
(51) Int. Cl.: G06Q 10/00

(54) **Customer information display system**

(30) Priority: 08.12.2006 GB 0624501
(71) Applicant: QM Group Limited, Milton Keynes MK19 7HJ (GB)
(72) Inventor: Green, Terence Ronald, Stanton Worcestershire WR12 7NQ (GB)
(74) Representative: Raynor, Simon Mark

(57) **Abstract**

An information display system is disclosed that is particularly intended for displaying information to waiting customers. The system comprises a content repository (12) that contains content items for display. Each content item is classified according to its subject-matter. The system further includes a display device (14) capable of displaying a content item from the repository (12) and a content server (10) that operates to select a content item from the repository and send it to the display device (14). The content server (10) accesses a list of customers who are waiting to be served, applies an analysis of the list to identify preferred subject-matter likely to be of interest to the customers, selects a content item from the content database that relates to the preferred subject-matter and sends the retrieved content item to the display device. The display system preferably interacts with an automated customer reception system to obtain the list of customers waiting to be served. Such a reception system typically interacts with customers through one or more terminals.

## Description

This invention relates to a customer information display system. In particular, it relates to a system for displaying variable information to a customer who is waiting prior to being served.

It is well-known to provide display screens in a waiting area of a business to convey information on products and services to waiting customers. The display screens display content that might include audiovisual material and static information pages. The screens may also display an indication of the likely waiting time.

A disadvantage with these display screens is that the content displayed may be of no interest to the waiting people. This is particularly so where the business offers a very wide range of goods and services.

An aim of this invention is to provide a system whereby information can be presented in a waiting area that is more likely to be of interest to those who are waiting.

Businesses that deal with customers who have a variety of requirements and arrive without appointments may make use of an automated customer reception system that includes a computer terminal that a customer can use on arrival, to make their requirements known to the business. Such a terminal is sometimes known as a "meet-and-greet" terminal. A typical terminal has a screen and a set of buttons on each side of the screen. The screen displays a choice of available products and services, and the customer or a member of the serving staff selects those services that are required by pressing the adjacent button. The terminal then transmits this information to a central system, which allocates an individual member of serving staff to the customer.

The present applicants have realised that the meet-and-greet system provides a source of information about the customers who are waiting to be served, and that it should be possible to make a deduction as to the subject-matter that is likely to be of interest to those customers.

From a first aspect, the invention provides an information system comprising: a content repository that contains content items for display, each content item being classified according to its subject-matter; a display device capable of displaying a content item from the repository; and a content server that operates to select a content item from the repository and send it to the display device, in which the content server accesses a list of customers who are waiting to be served, applies an analysis of the list to identify preferred subject-matter likely to be of interest to the customers, selects a content item from the content database that relates to the preferred subject-matter and sends the retrieved content item to the display device.

Thus, the content that is displayed on the display devices is not random, but is instead related to the likely areas of interest of the customers who are waiting and who will be exposed to the content.

The content items may include one or more of audio content, video content and static information pages.

The content items may further include real-time information. This may include information such as expected waiting time or up-to-date information about the products of the business.

Advantageously, the list of customers who are waiting to be served is obtained from an automated customer reception system. Such systems are already in use and can provide the information required to operate embodiments of the invention.

The analysis may be re-applied each time the list of waiting customers changes.

To avoid repetition, it is preferable that any one content item cannot be selected for reproduction until a predetermined time period has elapsed following a previous instance of it being reproduced. An alternative constraint would be that a content item cannot be selected for reproduction until all customers who were waiting during a previous instance of it being reproduced are no longer waiting.

Advantageously, the system includes at least one customer database that contains a list of customers waiting to be served and data relating to products in which the waiting customers have expressed an interest.

Advantageously, the system includes at least one customer terminal having means for enabling customers to indicate products in which they are interested.

An embodiment of the invention will now be described in detail, by way of example, and with reference to the accompanying drawings, in which:

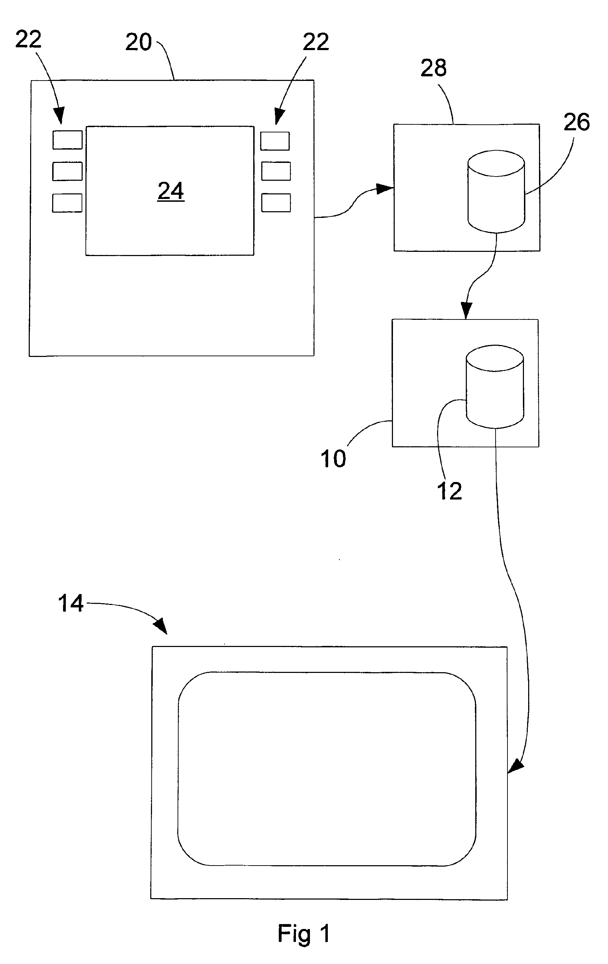

Figure 1 is a block diagram of an embodiment of the invention; and
Figure 2 is a flowchart that described operation of the embodiment of Figure 1.

An embodiment of the invention comprises a content server 10 that contains a content database 12. The content database contains a list of displayable content that is classified according to its subject-matter. The content database 12 contains audiovisual material and static information pages that can be displayed on one or more display devices 14 that are placed in a public waiting area. The content within the content database is classified according to its subject-matter. The display devices are semi-autonomous devices that include a content player and a visual display unit. The content server 10 can send content to the display devices 14 with a request that the content is added to a playlist of the content player.

The embodiment operates in cooperation with a customer meet-and-greet system, for example of the type described in WO2005/103970. This system, which is referred to in the drawings by the registered trade mark "Matchmaker", is known and so will be described only briefly.

The meet-and-greet system includes one or more reception terminals 20 that are disposed in a public reception area for use by arriving customers. The customer or a member of staff uses the reception terminal 20 to announce their arrival and to indicate the products (i.e. the goods or services) that are of interest by pressing buttons 22 that are disposed adjacent to a display screen 24. This information is stored in a customer database 26 on a central server 28. The meet-and-greet system uses this information to assign a server to handle the customer's requirements and maintains a record of the customer having received the requested service. When the server attends to the customer, he or she uses a communication device to inform the central server 28 whereupon the database is updated accordingly. Customers are also encouraged to use a terminal to inform the system if they decide not to continue waiting. The content server is connected to the server 28 such that it can access the content of the customer database 26 and retrieve from it a list of only those customers who are waiting to be served.

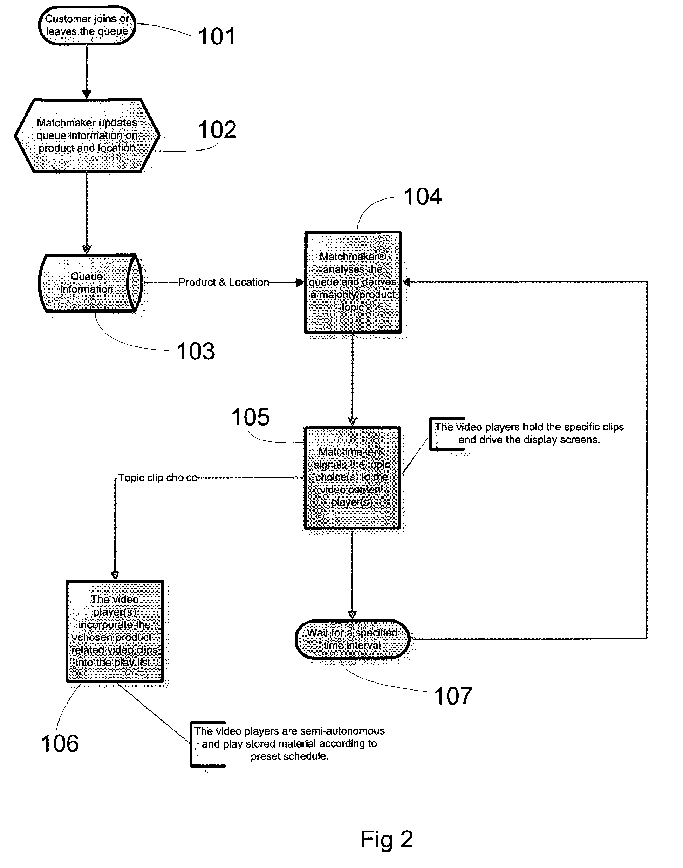

Operation of the system will now be described with reference to Figure 2.

Processing starts at step 101 when a customer arrives at the waiting area and uses the terminal 20 to record their arrival and the product in which they are interested. The terminal may also be used to indicate the customer's departure from the queue of waiting customers, either because they are being served or they have stopped waiting. The contents of the customer database 26 are updated at step 102 to reflect these changes.

The content server 10 queries the customer database to obtain a list of the waiting customers and the products in which they have expressed an interest at step 103.

The content server 10 then performs an analysis of the list, at step 104. The aim of the analysis is to determine the range of topics that are likely to be of interest to the majority of people who are waiting. The object of the analysis is to identify one or more categories that are likely to be of interest to some or all of the waiting customers.

A query is then made in the content database with the aim of selecting content that has content classified with categories that correspond to those identified as being of interest to the customers who are waiting. At step 105 the content identified is then sent to the display devices 14 with a request that the content is added to their playlists. The display devices 14 then add the content to their playlists for reproduction in due course (step 106).

The content server 10 then waits for a predetermined interval (step 107) before repeating the process from step 104.

Selection of content at step 105 may involve more than a simple match of content and topics of interest. It is desirable not to select content that has been played within a predetermined time interval to avoid the display becoming repetitive. Rules may also be derived to determine the action to be taken in the event that either there is no content that precisely matches the categories of interest, or all such content has already been displayed within a predetermined period. It is also desirable to display static pages that provide customers with real-time information, such as the expected waiting time or up-to-date product information (in particular, information that varies, such as share prices or interest rates). The system may also display broadcast video content, for example news programmes, interspersed with the product content. This helps to maintain customers' interest in the display.

It is also possible to send different content to different display devices 14. This is particularly useful where it is known that customers with specific interests are likely to wait in specifically designated areas. For example, there may be separate waiting areas for personal and business customers, and the content sent to the displays in those areas may be tailored accordingly.

## Claims

1. An information display system comprising: a content repository that contains content items for display, each content item being classified according to its subject-matter; a display device capable of displaying a content item from the repository; and a content server that operates to select a content item from the repository and send it to the display device, in which the content server accesses a list of customers who are waiting to be served, applies an analysis of the list to identify preferred subject-matter likely to be of interest to the customers, selects a content item from the content database that relates to the preferred subject-matter and sends the retrieved content item to the display device.

2. An information display system according to claim 1 in which the content items include one or more of audio content, video content and static information pages.

3. An information display system according to claim 1 or claim 2 in which the content items further includes real-time information.

4. An information display system according to claim 3 in which the real-time information includes expected waiting time information.

5. An information display system according to any preceding claim in which the list of customers who are waiting to be served is obtained from an automated customer reception system.

6. An information display system according to any preceding claim in which the analysis is reapplied to the list of customers each time the list changes.

7. An information display system according to any preceding claim having a plurality of display devices, the content items that are sent to any particular display device being selected as being likely to be of interest to customers waiting in the vicinity of the display device.

8. An information display system according to any preceding claim in which a content item is not selected for reproduction until a predetermined time period has elapsed following a previous instance of it being reproduced.

9. An information display system according to any preceding claim in which a content item is not selected for reproduction until all customers who were waiting during a previous instance of it being reproduced are no longer waiting.

10. An information display system according to any preceding claim in which the system includes a customer database that contains a list of customers waiting to be served and data relating to products in which the waiting customers have expressed an interest.

11. An information display system according to any preceding claim in which the system includes a customer terminal having means for enabling customers to indicate products in which they are interested.
